# EUROPÄISCHE PATENTSCHRIFT

(11) **EP 3 691 857 B1**
(45) Veröffentlichungstag und Bekanntmachung des Hinweises auf die Patenterteilung: **24.11.2021**
(21) Anmeldenummer: 19726377.5
(22) Anmeldetag: 22.05.2019
(51) Int. Cl.: B29C 49/20, B29C 49/48, B29C 49/54, B29C 49/06, B29C 49/12, B29C 49/36

(54) **MEHRTEILIG AUSGEBILDETE FORM FÜR DIE UMFORMENDE HERSTELLUNG VON BEHÄLTERN MIT GRIFF, UMFORMSTATION, UMFORMRAD UND UMFORMMASCHINE MIT EINER SOLCHEN FORM, VERFAHREN ZUR HERSTELLUNG EINES BEHÄLTERS MIT GRIFF UND NACH DIESEM VERFAHREN HERGESTELLTER BEHÄLTER**
MULTIPART MOULD FOR PRODUCING CONTAINERS WITH A HANDLE BY A FORMING PROCESS, FORMING STATION, FORMING WHEEL AND FORMING MACHINE WITH SUCH A MOULD, METHOD FOR PRODUCING A CONTAINER WITH A HANDLE AND CONTAINER PRODUCED BY THIS METHOD
MOULE EN PLUSIEURS PARTIES POUR LA FABRICATION PAR MOULAGE DE RÉCIPIENTS À POIGNÉE, STATION DE MOULAGE, ROUE DE MOULAGE ET MACHINE DE MOULAGE ÉQUIPÉ D'UN MOULE, PROCÉDÉ DE FABRICATION D'UN RÉCIPIENT À POIGNÉE ET RÉCIPIENT FABRIQUÉ SELON CE PROCÉDÉ

(30) Priorität: 23.05.2018 DE 102018004159
(43) Veröffentlichungstag der Anmeldung: 12.08.2020
(73) Patentinhaber: KHS Corpoplast GmbH, 22145 Hamburg (DE)
(72) Erfinder: AMARIGLIO, Stefan, 22145 Hamburg (DE)
(74) Vertreter: Eisenführ Speiser
(86) Internationale Anmeldenummer: PCT/EP2019/063217
(87) Internationale Veröffentlichungsnummer: WO 2019/224249

(56) Entgegenhaltungen:
- EP-A1- 0 827 479
- JP-A- H11 314 268
- US-A- 5 533 881
- US-A1- 2007 290 413
- US-A1- 2015 328 818

## Beschreibung

Die Erfindung betrifft eine mehrteilig ausgebildete Form nach dem Oberbegriff von Anspruch 1, eine Umformstation mit einer solchen Form nach Anspruch 8, ein Umformrad rotierender Bauart mit mehreren umfangsbeabstandet daran angeordneten Umformstationen nach Anspruch 9, eine Umformmaschine mit wenigstens einer Umformstation nach Anspruch 10, ein Verfahren zur umformenden Herstellung von mit einem Griff versehenen Behältern aus Vorformlingen nach Anspruch 11 sowie einen mit einem Griff versehenen Behälter nach Anspruch 12.

Die Erfindung betrifft einerseits den technischen Bereich der blasformenden Herstellung von Behältern aus Vorformlingen, bei denen ein Blasgas, beispielsweise Druckluft, in einen temperaturkonditionierten Vorformling eingebracht wird. Andererseits betrifft die Erfindung auch den technischen Bereich der gleichzeitigen Umformung und Befüllung von Behältern aus Vorformlingen, bei denen das Füllgut als Umformfluid eingesetzt wird. Beide technischen Bereiche werden nachfolgend erläutert und die Ansprüche und die darin verwendeten Begriffe sollen beide technischen Bereiche umfassen.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 43 40 291 A1). Typischerweise weist eine Blasmaschine eine Heizeinrichtung zum Temperieren bzw. zum thermischen Konditionieren der Vorformlinge sowie eine Blaseinrichtung mit wenigstens einer Blasstation auf, in deren Bereich der jeweils zuvor temperierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind in der DE 23 52 926 A1 erläutert. Unter Temperierung oder thermischer Konditionierung wird dabei verstanden, dass der Vorformling auf eine für die Blasumformung geeignete Temperatur erwärmt und ggf. ein Temperaturprofil dem Vorformling aufgeprägt wird. Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulisches Umformverfahren oder als hydraulische Behälterformung bezeichnet werden. Auch hier ist es bekannt, diese Umformung durch den Einsatz einer Reckstange zu unterstützen.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1.

Die nachfolgend verwendeten Begriffe Umformstation, Umformrad, Umformmaschine oder auch mehrteilig ausgebildete Form sollen beide technischen Bereiche umfassen, also sowohl die blasformende Umformung als auch die hydraulische Umformung.

Innerhalb der genannten Vorrichtungen zur Umformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Umformrad und einer Ausgabestrecke beschrieben.

Im Hinblick auf die verwendeten Umformstationen sind unterschiedliche Ausführungsformen bekannt. Bei Umformstationen, die auf rotierenden Umformrädern angeordnet sind, ist eine buchartige Aufklappbarkeit der Formträger häufig anzutreffen, also eine Schwenkbarkeit um eine Schwenkachse. Es ist aber auch möglich, relativ zueinander verschiebliche oder andersartig geführte Formträger einzusetzen. Bei ortsfesten Umformstationen, die insbesondere dafür geeignet sind, mehrere Kavitäten zur Behälterformung aufzunehmen, werden typischerweise parallel zueinander angeordnete Platten als Formträger verwendet.

Typischerweise werden im Bereich der Umformstationen die verwendeten, mehrteilig ausgebildeten Formen von Formträgern gehaltert. Die Formen sind in der Regel in zwei seitliche Formhälften sowie eine Bodenform unterteilt. Die Formträger werden typischerweise mechanisch miteinander verriegelt oder mechanisch gegeneinander verspannt. Bei einer Umformung der Vorformlinge in die Behälter als Folge einer Druckfluideinwirkung wird dadurch dafür gesorgt, dass ein Entstehen von Formspalten, die sich auf dem Behälter aufprägen würden, verhindert wird.

Die umformende Herstellung von Behältern mit einer im wesentlichen rotationssymmetrischen und zylinderähnlichen Außenkontur erweist sich in der Regel als unproblematisch. Je stärker der herzustellende Behälter von einer derartigen Kontur abweicht, um so höher werden die Anforderungen an die Optimierung der verfahrenstechnischen Parameter. Ein besonderes Problem bereitet die Bereitstellung von Behältern mit Griffen oder Griffprofilen. Das Vorsehen von Griffen ist insbesondere bei größeren Behältern erwünscht, um deren Handhabbarkeit durch Personen zu verbessern. Als größere Behälter werden hierbei z.B. Behälter mit einem Volumen in einem Bereich von 2 bis 6 Litern verstanden. Entsprechend müssen die Griffe einige Stabilität aufweisen. Aber auch für kleinere als die genannten Behältergrößen kann das Vorsehen von Griffen gewünscht sein.

Gemäß dem Stand der Technik ist es bereits bekannt, den Behälter durch eine geeignete Wahl der Innenkontur der Form bereits im Umformschritt mit Griffmulden zu versehen. Die US 2007/0023978 A1 offenbart beispielsweise einen Behälter mit daran integral angeformtem Griff. Diese Art der einteiligen Herstellung des Behälters mit Griff macht den Aufbau des Vorformlings sowie den Aufbau der mehrteiligen Form kompliziert. Generell findet die Ausbildung des Griffes bereits während der Umformung seine Grenzen in der Verformbarkeit bzw. Streckbarkeit des Werkstoffes, aus dem die Vorformlinge hergestellt sind. Die vorliegende Erfindung betrifft nicht diese einteilig hergestellten Behälter mit Griffmulden.

Alternativ dazu ist auch eine Herstellung von zweiteiligen Behältern mit Griff bekannt: zweiteilig meint, dass das Griffteil als separates Teil vorgesehen ist und nicht einteilig mit dem Behälter hergestellt ist. Es ist z.B. bekannt, einen fertig ausgeformten Behälter in eine Spritzform einzusetzen und einen Griff anzuspritzen. Dies führt zu hohem apparativem Aufwand und zu einer längeren Prozessdauer. Beispiele hierfür sind in EP 0 827 479 A1, GB 2 255 546 A und WO 82/02 370 A1 offenbart. Es ist auch bereits bekannt, Griffteile als Einlegeelemente in die mehrteilige Form einzusetzen und durch eine geeignete Umformkontur zu fixieren. Fixierbereiche der Einlegeelemente werden bei der Expansion des Vorformlings zum Behälter umschlossen und dadurch das Griffteil am Behälter fixiert. Entsprechende Griffteile sind nicht sehr stabil gegen ein Ablösen. Auch hier sind Grenzen in der Verformbarkeit bzw. Streckbarkeit des Werkstoffes zu berücksichtigen, aus dem die Vorformlinge hergestellt sind.

In der WO 2004/085133 A1 wird die blasformende Herstellung von Behältern mit Griffmulden beschrieben, wobei zur Erzeugung der Griffmulden verschiebliche Stößel in der Blasform angeordnet sind. Einen ähnlichen Stand der Technik aus dem Bereich der Blasformung zeigen auch die WO 2010/015219 A2, die US 5,533,881 A1, die JP H11-314268 A und die EP 0 346 518 A1. Es wird als nachteilig angesehen, dass sehr spezielle Blasformen mit beweglichen Elementen benötigt werden und die Maschine insgesamt umzurüsten ist, z.B. für die Versorgung der Stößel mit einem Antriebsmedium. Ein schneller Formwechsel ist überdies nicht mehr möglich.

Die DE 694 05 248 T2 zeigt Verfahren und Vorrichtungen zur blasformenden Herstellung von zweiteiligen Behältern mit Griffteilen. Während des Formungsvorgangs für den Behälter werden von beweglichen Schiebern Ausnehmungen in der Behälteraußenkontur geschaffen, in die später ein Griffansatz eines Griffteiles einrasten soll. Auch bei diesem Stand der Technik führt das Vorsehen von beweglichen Elementen in der Blasform zu deutlichen Modifikationen gegenüber üblichen Blasformen und zu einer Umrüstung der Maschine insgesamt, da die beweglichen Blasformelemente anzutreiben sind. Auch hier ergeben sich erhebliche Nachteile beim Formwechsel, wenn also auf die Herstellung anderer Behälter umzustellen ist.

Die DE 101 41 640 A1 zeigt ebenfalls Verfahren und Vorrichtungen zur blasformenden Herstellung von zweiteiligen Behältern mit Griffteilen. Ohne bewegliche Formelemente wird während des Formungsvorgangs für den Behälter ein Befestigungsprofil in der Behälteraußenkontur geschaffen, in die später ein Gegenprofil am Griffteil formschlüssig eingreifen soll. Details zur Erzeugung des Befestigungsprofils und zur Entformung der fertigen Behälter werden nicht angegeben.

Aufgabe der vorliegenden Erfindung ist es, Vorrichtungen und Verfahren der einleitend genannten Art anzugeben, mit denen die Herstellung von zweiteiligen Behältern mit Griffteilen unterstützt wird. Die Erfindung betrifft dabei insbesondere mehrteilige Formen, Umformstationen, Umformräder und Umformmaschinen sowie Herstellungsverfahren für mit einem Griff versehene Behälter.

Diese Aufgabe wird erfindungsgemäß gelöst durch eine mehrteilig ausgebildete Form mit den Merkmalen des Anspruchs 1, durch eine Umformstation mit den Merkmalen des Anspruchs 8, durch ein Umformrad nach Anspruch 9 und durch eine Umformmaschine nach Anspruch 10. Weiterhin wir die Aufgabe erfindungsgemäß gelöst durch ein Verfahren nach Anspruch 11 sowie durch einen Behälter nach Anspruch 12. Weitere vorteilhafte Ausgestaltungen sind in den Unteransprüchen angegeben.

Es wird nachfolgend bei der Erläuterung der Erfindung und der verschiedenen bevorzugten Ausführungsvarianten nicht zwischen Verfahren und Vorrichtungen unterschieden. Anhand von Vorrichtungsmerkmalen erläuterte Vorteile lassen sich auch bei erfindungsgemäßen Verfahren durch entsprechend analog vorzusehende Verfahrensmerkmale realisieren und umgekehrt.

Die Erfindung geht aus von einer mehrteilig ausgebildeten Form für die umformende Herstellung von mit einem Griff versehenen Behältern aus temperaturkonditionierten Vorformlingen aus einem thermoplastischen Werkstoff, insbesondere aus PET. Die Mehrteiligkeit der Form ist realisiert durch wenigstens zwei Formhälften. Bevorzugt weist die Form weiterhin ein Bodenteil auf. Die Formhälften, optional auch das Bodenteil, sind beweglich zueinander angeordnet und können entlang einer Positionierbewegungsbahn aus einer Geschlossen- in eine Offenstellung und umgekehrt positioniert werden. In der Offenstellung lassen sich Vorformlinge in die Form einsetzen bzw. fertige Behälter entnehmen. Die Formhälften liegen in ihrer Geschlossenstellung entlang einer Trennebene aneinander an, sodass sie eine Kavität umschließen und eine Innenkontur bereitstellen, gegen die der Vorformling durch Einleiten eines Umformmediums unter Druck, z.B. Blasluft oder ein einzufüllendes Füllgut, in einer radialen Richtung und in einer Längsrichtung expandiert wird, sodass der in der Form expandierte fertige Behälter eine zur Innenkontur der Form komplementäre Außenkontur aufweist. Optional wird die Umformung durch Reckung mittels einer Reckstange unterstützt. Die Innenkontur der Form weist einen Bereich auf, der für die später erfolgende Anbringung eines Griffes am fertigen Behälter von Bedeutung ist. Dieser als Griffbefestigungsbereich bezeichnete Bereich der Innenkontur der Form ist konturiert für die Ausbildung einer Befestigungskontur am fertigen Behälter, nämlich für die Anbringung eines Griffes am Behälter nach dessen Entnahme aus der Form. Erfindungsgemäß ist vorgesehen, dass der Griffbefestigungsbereich als in radialer Richtung hintergreifbarer Hinterschnitt ausgebildet ist, der in Umfangsrichtung der Positionierbewegungsbahn folgend ausgeführt ist, oder anders ausgedrückt führt dieser Griffbefestigungsbreich zu einer Befestigungskontur am fertigen Behälter mit in radialer Richtung hintergreifbaren Bereichen. Liegt eine gekrümmte Positionierbewegungsbahn vor, z.B. bei um eine Schwenkachse schwenkenden Formhälften, also bei buchartiger Aufklappbarkeit, ist auch der hintergreifbare Hinterschnitt entsprechend gekrümmt auszuführen. Liegt eine geradlinige Positionierbewegungsbahn vor, z.B. bei parallelverschieblichen Formhälften, ist auch der Hinterschnitt geradlinig verlaufend auszuführen. Es wird dadurch erreicht, dass beim Öffnen der Form der Griffbefestigungsbereich aus der komplementär am Behälter ausgebildeten Befestigungskontur herausgleiten kann. Die Dimensionierung des Hinterschnittes in Umfangsrichtung erfolgt dabei so, dass in der Offenstellung kein hintergreifender Eingriff der Formhälften mit dem Hinterschnitt am Behälter mehr vorliegt und somit der Behälter in radialer Richtung aus der geöffneten Form entnommen werden kann.

Bezogen auf den fertigen Behälter kann dieser hintergreifbare Hinterschnitt z.B. als hintergreifbarer Vorsprung ausgeführt sein, z.B. als zwei (oder mehrere) in Behälterlängsrichtung voneinander beabstandete, hintergreifbare Vorsprünge. Ein Griffteil mit geeigneter Haltestruktur kann die Vorsprünge hintergreifen und ist dadurch in radialer Richtung gegen ein Ablösen gesichert.

Die Erfindung vermeidet die aus dem Stand der Technik bekannten verschieblichen Elemente in der mehrteiligen Form. Daher sind auch keine Versorgungsleitungen vorzusehen und das Umrüsten auf geänderte Formen ist deutlich erleichtert. Die Änderungen gegenüber den bekannten Formen sind mit geringem Aufwand ausführbar. Die Montage des Griffes am Behälter ist ebenfalls auf einfache Art realisierbar, z.B. ohne einen zusätzlichen Anspritzschritt.

Bevorzugt sind die Formhälften der mehrteilig ausgebildeten Form um eine gemeinsame Schwenkachse schwenkbeweglich angeordnet. Eine solche buchartige Aufklappbarkeit der Form wird bevorzugt bei Maschinen rotierender Bauart realisiert. Der Griffbefestigungsbereich ist dann in Umfangsrichtung gekrümmt konturiert mit einem Krümmungsradius, der dem radialen Abstand des Griffbefestigungsbereiches zur Schwenkachse entspricht. Die gekrümmte Konturierung folgt also der Positionierbewegungsbahn.

Mit dem geschilderten hintergreifbaren Hinterschnitt ist eine Sicherung für den Griff in radialer Richtung gegeben. Dieser Hinterschnitt wird daher als Hinterschnitt in radialer Richtung oder als radialer Hinterschnitt bezeichnet. Allerdings sollte der am Behälter angebrachte Griff auch in Umfangsrichtung gegen ein Verrutschen gesichert werden. Dies könnte z.B. durch Ankleben erreicht werden. Bevorzugt ist allerdings, dass der Griffbefestigungsbereich auch in Umfangsrichtung einen Hinterschnitt aufweist, der aber um ein mehrfaches kleiner dimensioniert ist als der Hinterschnitt in radialer Richtung, nämlich so klein, dass die Öffnungsbewegung der Form trotz des Hinterschnittes in Umfangsrichtung ausführbar ist, z.B. aufgrund des eintretenden Rückschrumpfens des fertigen Behälters und/oder aufgrund plastischer Verformung des Behältermaterials, bevorzugt aber unter Überwindung eines geringen Widerstandes. Da nur geringe Kräfte in Umfangsrichtung aufgenommen werden müssen, kann der Hinterschnitt entsprechend klein gehalten werden.

Aus Fertigungsgründen ist bevorzugt, dass der Griffbefestigungsbereich als ein Einbauteil ausgeführt ist, das zur Bildung einer Formhälfte in ein Formelement mit hinterschnittfreier Innenkontur montierbar ist bzw. montiert wird. Das Einbauteil lässt sich einfach z.B. durch Fräsen herstellen und erst im montierten Zustand entsteht eine Innenkontur der Form mit einem Hinterschnitt.

Für eine ausreichende Stabilität der Griffbefestigung erweisen sich bestimmte Dimensionierungen als vorteilhaft. So ist es vorteilhaft, dass der radiale Hinterschnitt einen hintergeifbaren Bereich aufweist, dessen Erstreckung in Achsrichtung mindestens 0,5 cm, bevorzugt mindestens 0,7 cm, weiterhin bevorzugt mindestens 1 cm beträgt. In diesen hintergeifbaren Bereich, bzw. korrekter gesagt in den daraus am Behälter entstehenden hintergreifbaren Bereich, kann ein entsprechend dimensionierter Ansetzbereich am Griff eingreifen und den auftretenden Kräften sicher standhalten. Grundsätzlich sollte die Dimensionierung um so größer gewählt werden, je größer der Behälter ist und je weicher und je dünner das Wandmaterial ist. Eine geeignete Dimensionierung lässt sich aber in Abhängigkeit von der Behältergröße, von der Wandstärke des fertigen Behälters und vom Wandmaterial leicht durch Herstellung weniger Testbehälter ermitteln.

Es erweist sich weiterhin als vorteilhaft, dass der Hinterschnitt in radialer Richtung wenigstens um einen Faktor 5 größer dimensioniert ist als der Hinterschnitt in Umfangsrichtung, bevorzugt wenigstens um einen Faktor 10. Dies trägt den standzuhaltenden Kräften Rechnung.

Mit Vorteil erstreckt sich der Griffbefestigungsbereich zu beiden Seiten der Trennebene der Form, insbesondere spiegelsymmetrisch zu beiden Seiten der Trennebene. Dies erleichtert einerseits die Herstellung der Form und andererseits das Entformen der fertigen Behälter.

Die Erfindung betrifft auch eine Umformstation mit einer mehrteilig ausgebildeten Form mit den geschilderten erfindungsgemäßen Merkmalen, wobei die Form von einem Formträger der Umformstation gehaltert ist, insbesondere austauschbar gehaltert. Ebenso betrifft die Erfindung ein Umformrad rotierender Bauart mit mehreren umfangsbeabstandet daran angeordneten erfindungsgemäßen Umformstationen, sowie eine Umformmaschine mit wenigstens einer erfindungsgemäßen Umformstation, insbesondere mit einem erfindungsgemäßen Umformrad.

Schließlich betrifft die Erfindung ein Verfahren zur umformenden Herstellung von mit einem Griff versehenen Behältern aus temperaturkonditionierten Vorformlingen aus einem thermoplastischen Werkstoff, insbesondere aus PET, wobei eine erfindungsgemäße, mehrteilig ausgebildete Form verwendet wird. An dem fertigen Behälter wird nach dessen Entnahme aus der Form ein Griff befestigt, der eine Eingriffskontur aufweist, die formschlüssig mit der Befestigungskontur am fertigen Behälter in Eingriff gebracht wird.

Die Erfindung wird im Folgenden anhand der Figuren an Ausführungsbeispielen näher erläutert. Es zeigen:
- Figur 1: eine schematische Darstellung eines Grundaufbaus einer Form- und Füllmaschine zur Durchführung der hydraulischen Behälterformung unter Verwendung eines Füllgutes,
- Figur 2: einen schematischen Längsschnitt durch einen Vorformling mit teilweise eingeführter Reckstange,
- Figur 3: einen schematischen Längsschnitt durch einen grifflos geformten Behälter mit teilweise eingeführter Reckstange,

- Fig. 4: eine perspektivische Darstellung einer Blasstation zur blasformenden Herstellung von Behältern aus Vorformlingen,
- Fig. 5: einen Längsschnitt durch eine Blasform, in der ein Vorformling gereckt und expandiert wird,
- Fig. 6:: einen Längsschnitt durch einen erfindungsgemäßen und erfindungsgemäß hergestellten Behälter mit einem montierten Griffteil,
- Fig. 7:: eine Seitenansicht auf den Griffbereich des in Figur 6 im Längsschnitt gezeigten Behälters,
- Fig. 8:: eine Ansicht von oben auf den in den Figuren 6 und 7 gezeigten Behälter,
- Fig. 9:: eine Seitenansicht und eine perspektivische Ansicht eines Griffteiles, und
- Fig. 10:: einen Längsschnitt durch eine mehrteilige Form entlang der Trennebene zwischen den Formhälften.

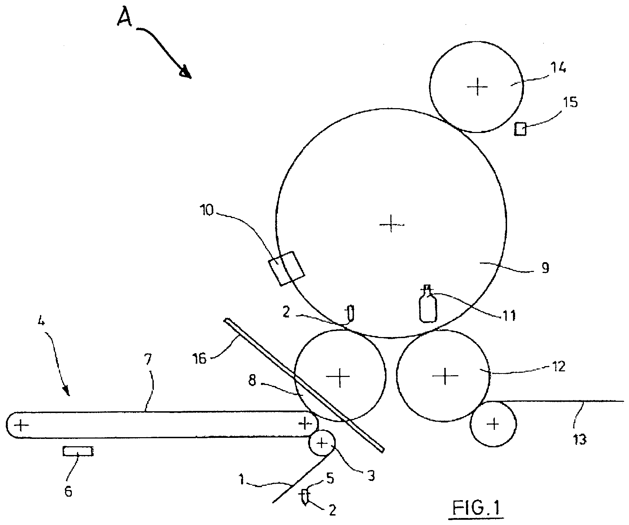

Der prinzipiell aus dem Stand der Technik bekannte Aufbau einer kombinierten Form- und Füllmaschine A als erstes Ausführungsbeispiel für eine Umformmaschine ist in Figur 1 dargestellt. Die Darstellung zeigt die bevorzugte Ausbildung einer solchen Maschine als eine rotierender Bauart mit einem rotierenden Arbeitsrad (9). Von einer Zuführeinrichtung (1) werden schematisch dargestellte Vorformlinge (2), die auch als Preforms bezeichnet werden, unter Verwendung eines Übergaberades (3) kontinuierlich einer Heizeinrichtung (4) zugeführt. Im Bereich der Heizeinrichtung (4), in der die Vorformlinge (2) entlang einer Heizstrecke transportiert und dabei thermisch konditioniert werden, können die Vorformlinge (2) anwendungsabhängig beispielsweise mit ihren Mündungsabschnitten (5) in lotrechter Richtung nach oben oder in lotrechter Richtung nach unten transportiert werden. Die Heizeinrichtung (4) ist beispielsweise mit Heizelementen (6) ausgestattet, die entlang einer Transporteinrichtung (7) zur Ausbildung der Heizstrecke angeordnet sind. Als Transporteinrichtung (7) kann beispielsweise eine umlaufende Kette mit Transportdornen zur Halterung der Vorformlinge verwendet werden. Als Heizelemente (6) eignen sich beispielsweise IR-Strahler oder Licht emittierende Dioden oder NIR-Strahler. Da solche Heizeinrichtungen in vielfältiger Art im Stand der Technik bekannt sind und die konstruktiven Einzelheiten der Heizeinrichtung für die vorliegende Erfindung nicht wesentlich sind, kann auf eine detailliertere Beschreibung verzichtet und auf den Stand der Technik verwiesen werden, insbesondere auf den Stand der Technik zu Heizeinrichtungen von Blas- und von Streckblasmaschinen.

Nach einer ausreichenden Temperierung (auch thermische Konditionierung genannt) werden die Vorformlinge (2) von einem Übergaberad (8) zu einem rotationsfähig angeordneten, d.h. um eine vertikale Maschinenachse umlaufend antreibbaren Arbeitsrad (9) bzw. an Form- und Füllstationen (10) übergeben, die an dem Arbeitsrad (9) umfangsverteilt vorgesehen sind. Das Arbeitsrad (9) ist mit einer Mehrzahl solcher Form- und Füllstationen (10) ausgestattet, in deren Bereich sowohl eine Umformung der Vorformlinge (2) in die schematisch dargestellten Behälter (11) als auch eine Befüllung der Behälter (11) mit dem vorgesehenen Füllgut erfolgt. Das Umformen jedes Behälters (11) erfolgt hierbei zeitgleich mit der Befüllung, wobei das Füllgut als Druckmedium beim Umformen dient.

Nach dem Umformen und Füllen werden die Behälter (11) von einem Entnahmerad (12) vom Arbeitsrad (9) entnommen, weitertransportiert und einer Ausgabestrecke (13) zugeführt. Das Arbeitsrad (9) läuft im Produktionsbetrieb kontinuierlich mit einer gewünschten Umlaufgeschwindigkeit um. Während eines Umlaufs erfolgt das Einsetzen eines Vorformlings (2) in eine Form- und Füllstation (10), die Expansion des Vorformlings (2) zu einem Behälter (11) inklusive Füllung mit einem Füllgut und ggf. inkl. Reckung, falls eine Reckstange vorgesehen ist, und die Entnahme des Behälters (11) aus der Form- und Füllstation (10).

Gemäß der Ausführungsform in Figur 1 ist weiterhin vorgesehen, dem Arbeitsrad (9) über eine Eingabeeinrichtung (14) schematisch dargestellte Verschlusskappen (15) zuzuführen. Hierdurch ist es möglich, auf dem Arbeitsrad (9) auch bereits ein Verschließen der Behälter (11) durchzuführen und unter Verwendung der Entnahmeeinrichtung (12) fertig geformte, gefüllte und verschlossene Behälter (11) zu handhaben. Einzelheiten zu den Verschlusskappen (15) und zum Verschließen der Behälter (11) sind im Stand der Technik bekannt.

Als Material für die Vorformlinge (1) können unterschiedliche thermoplastische Werkstoffe verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge (2) können an die Größe, das Gewicht und/oder an die Gestaltung der herzustellenden Behälter (11) angepasst werden.

Eine Handhabung der Vorformlinge (2) und/oder der Behälter (11) erfolgt vorzugsweise unter Verwendung von Zangen und/oder den Mündungsabschnitt (5) wenigstens bereichsweise von innen oder von außen beaufschlagenden Klemm- oder Steckdorne. Solche Handhabungsmittel sind ebenfalls aus dem Stand der Technik ausreichend bekannt.

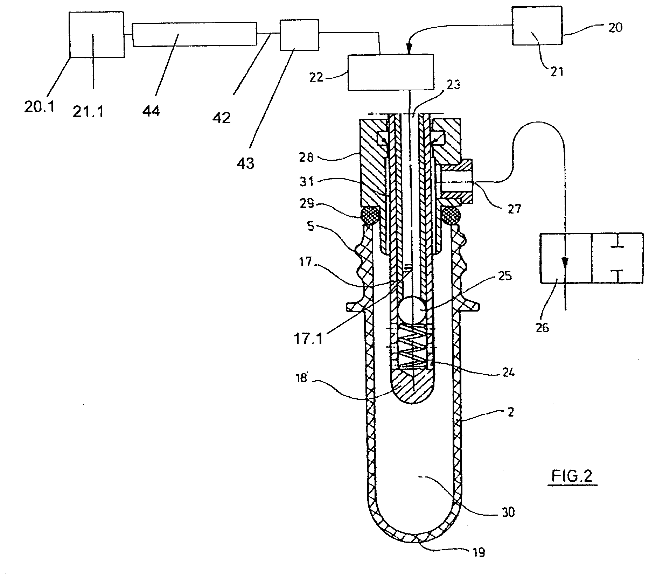

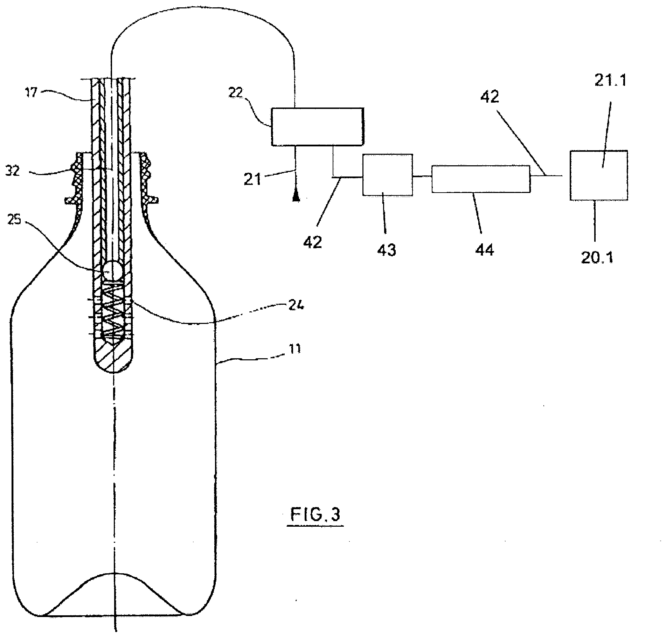

Figur 2 und 3 zeigen einen Längsschnitt durch einen Vorformling (2) bzw. einen Behälter (11), in den eine Reckstange (17) eingeführt ist. Die Reckstange (17) dient der mindestens zeitweisen Führung des Vorformlings (1) während seiner Umformung zum Behälter (11). Typischerweise erfolgt ein Kontakt zwischen einer Kuppe (18) der Reckstange (17) und einem Boden (19) des Vorformlings (2). Bei einem weiteren Einfahren der Reckstange (17) in den Vorformling (2) hinein wird eine Längsreckung des Vorformlings (2) verursacht. Nach einem Abschluss des Reckvorganges oder zumindest zeitweilig auch bereits während der Durchführung des Reckvorganges wird einer Vorratseinrichtung (20) entnommenes Füllgut (21) unter einem Fülldruck in den Vorformling (2) eingeleitet.

Eine Dosierung des Füllgutes (21) erfolgt unter Verwendung eines Mehrwegedosierventils (22). Beim dargestellten Ausführungsbeispiel ist die Reckstange (17) mindestens bereichsweise hohl bzw. mit einem Kanal (32) ausgebildet. Im Bereich einer Wandung eines kuppenseitigen Endbereiches der Reckstange (17) sind Ausströmöffnungen (24) angeordnet, die von einem Rückschlagventil (25) gegenüber dem Mehrwegedosierventil (22) absperrbar sind. Hierdurch kann ein unbeabsichtigtes Heraustropfen von Füllgut (21) aus der Reckstange (17) vermieden bzw. minimiert werden.

Eine Entlüftung des Vorformlings (2) kann unter Verwendung eines Entlüftungsventils (26) erfolgen. Das Entlüftungsventil (26) ist mit einer Entlüftungsöffnung (27) verbunden, die im Bereich eines den Vorformling (1) beaufschlagenden Form- und Füllkopfes (28) angeordnet ist. Durch den Form- und Füllkopf (28) hindurch ist die Reckstange (17) in axialer Richtung positionierbar. Der Vorformling (2) wird an seinem mündungsseitigen Ende gegenüber dem Form- und Füllkopf (28) von einer Dichtung (29) abgedichtet, die beispielsweise als ein O-Ring ausgebildet sein kann. Ein Innenraum (30) des Vorformlings (2) kann über einen Ringspalt (31) mit der Ausströmöffnung (27) verbunden sein. Der Ringspalt (31) umschließt hierbei bereichsweise die Reckstange (17). Der Form- und Füllkopf (28) kann gemäß seiner Funktion auch als Anschlusselement bezeichnet werden.

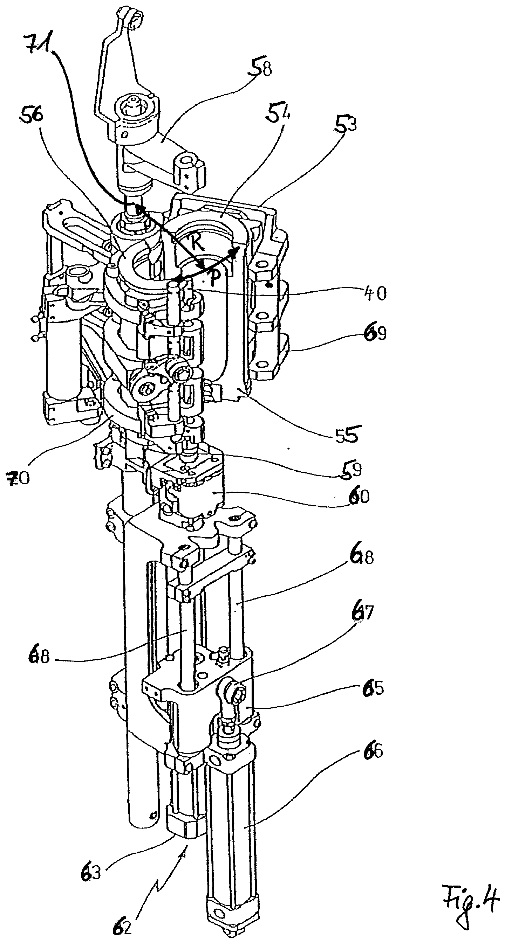

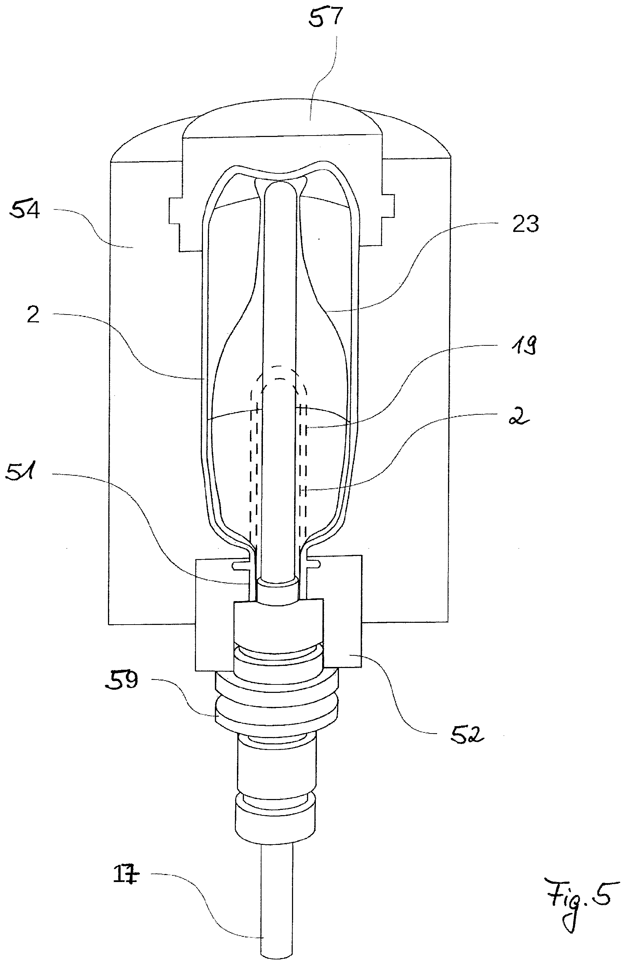

Das bisherige Ausführungsbeispiel betraf eine Umformmaschine A für die hydraulische Umformung von Vorformlingen mit Form- und Füllstationen als Beispiel für anspruchsgemäße Umformstationen. Nachfolgend werden Umformstationen aus dem Bereich der blasformenden Umformung beschrieben, nämlich anhand der Fig. 4 und 5 der prinzipielle Aufbau einer Blasstation zur blasformenden Umformung von Vorformlingen (2) in Behälter (11). Die Anordnung kann dabei wie dargestellt oder in einer vertikalen Ebene um 180° gedreht erfolgen.

Die Umformstation zur Umformung des Vorformlings (2) ist gemäß der Figuren 4 und 5 als Blasstation (53) ausgeführt, die mit einer Blasform (54) versehen ist, in die ein Vorformling (2) einsetzbar ist. Der Vorformling (2) kann ein spritzgegossenes Teil aus Polyethylenterephthalat sein. Zur Ermöglichung eines Einsetzens des Vorformlings (2) in die Blasform (54) und zur Ermöglichung eines Herausnehmens des fertigen Behälters (11) besteht die Blasform (54) aus Formhälften (55, 56) und einem Bodenteil (57), das von einer Hubvorrichtung (58) positionierbar ist. Der Vorformling (2) kann im Bereich der Blasstation (53) von einem Halteelement (59) fixiert sein. Dieses Halteelement (59) kann wie im Stand der Technik bekannt ausgebildet sein. Es ist beispielsweise möglich, den Vorformling (2) über Zangen oder andere Handhabungsmittel direkt in die Blasform (54) einzusetzen. Zur Ermöglichung einer Druckluftzuleitung ist unterhalb der Blasform (54) ein Anschlusskolben (60) angeordnet, der dem Vorformling (2) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (2) erfolgt bei diesem Ausführungsbeispiel mit Hilfe einer Reckstange (17), die von einem Zylinder (62) positioniert wird. Gemäß einer anderen Ausführungsform wird eine mechanische Positionierung der Reckstange (17) über Kurvensegmente durchgeführt, die von Abgriffrollen beaufschlagt sind. Die Verwendung von Kurvensegmenten ist insbesondere dann zweckmäßig, wenn mehrere Blasstationen (53) auf einem rotierenden Arbeitsrad (9) angeordnet sind. Es ist aber auch bekannt, die Reckstange z.B. mit einem Linearmotor anzutreiben.

Bei der in Fig. 4 dargestellten Ausführungsform ist das Recksystem derart ausgebildet, dass eine Tandemanordnung von zwei Zylindern (62) bereitgestellt ist. Von einem Primärzylinder (63) wird die Reckstange (17) zunächst vor Beginn des eigentlichen Reckvorganges bis in den Bereich eines Bodens (19) des Vorformlings (2) gefahren. Während des eigentlichen Reckvorganges wird der Primärzylinder (63) mit ausgefahrener Reckstange gemeinsam mit einem den Primärzylinder (63) tragenden Schlitten (65) von einem Sekundärzylinder (66) oder über eine Kurvensteuerung positioniert. Insbesondere ist daran gedacht, den Sekundärzylinder (66) derart kurvengesteuert einzusetzen, dass von einer Führungsrolle (67), die während der Durchführung des Reckvorganges an einer Kurvenbahn entlang gleitet, eine aktuelle Reckposition vorgegeben wird. Die Führungsrolle (67) wird vom Sekundärzylinder (66) gegen die Führungsbahn gedrückt. Der Schlitten (65) gleitet entlang von zwei Führungselementen (68).

Nach einem Schließen der im Bereich von Formträgern (69, 70) angeordneten Formhälften (55, 56) erfolgt eine Verriegelung der Träger (69, 70) relativ zueinander mit Hilfe einer Verriegelungseinrichtung (40). Zur Anpassung an unterschiedliche Formen eines Mündungsabschnittes (5) des Vorformlings (2) ist gemäß Fig. 5 die Verwendung separater Gewindeeinsätze (52) im Bereich der Blasform (54) vorgesehen.

Fig. 5 zeigt zusätzlich zum geblasenen Behälter (11) auch gestrichelt eingezeichnet den Vorformling (2) und schematisch eine sich entwickelnde Behälterblase (23).

Die von den Formträgern (69,70) gehaltenen Formhälften (55,56) sind um eine Schwenkachse (71) schwenkbar, sodass sich die beiden Formhälften (55,56) voneinander weg bzw. aufeinander zu bewegen entlang der mit dem gekrümmten Pfeil (P) angegebenen Positionierbewegungsbahn. Der besagte gekrümmte Pfeil (P) befindet sich auf einem Kreis mit Radius (R) um die Schwenkachse (71) herum. Bei Anordnung einer Blasstation (53) zum Beispiel auf einem Arbeitsrad (9) wie in Figur 1 gezeigt, ist zum Beispiel die Schwenkachse (71) radial weiter innen liegend angeordnet als die freien Enden der Blasformträger (69,70,) sodass Vorformlinge (2) in einfacher Weise in die geöffnete Blasform (54) eingesetzt werden können. Bekannt ist zum Beispiel eine Anordnung der Blasstationen (53) derart, dass die Trennebene (72) zwischen den Formhälften (55, 56) in radialer Richtung des Arbeitsrades verläuft oder leicht geneigt zu dieser radialen Richtung. Bekannt ist auch, eine der Formhälften beweglich und die andere unbeweglich auszuführen.

Das in den Figuren 4 und 5 gezeigte Ausführungsbeispiel betrifft den Bereich der blasformenden Herstellung von Behältern. Form- und Füllstationen zum gleichzeitigen Formen und Füllen von Behältern sind allerdings prinzipiell vergleichbar aufgebaut, insbesondere die mehrteilig ausgebildete Form ist bei beiden technischen Bereichen im wesentlichen gleich. Umgekehrt wurde anhand der Figuren 1 - 3 der generelle Aufbau einer Umformmaschine A am Beispiel einer Form- und Füllmaschine erläutert. Der prinzipielle Aufbau einer Blasmaschine unterscheidet sich in grundsätzlicher Hinsicht nicht von diesem Aufbau.

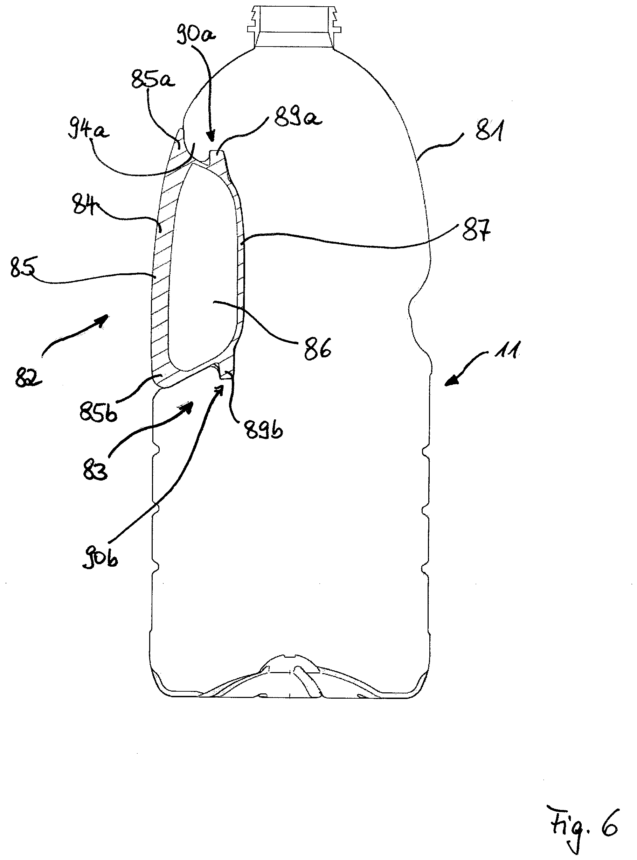

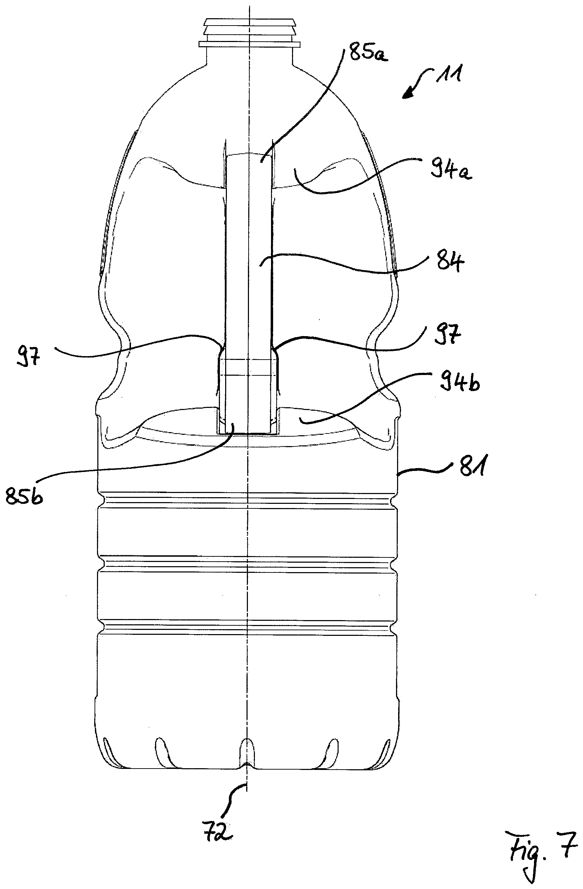

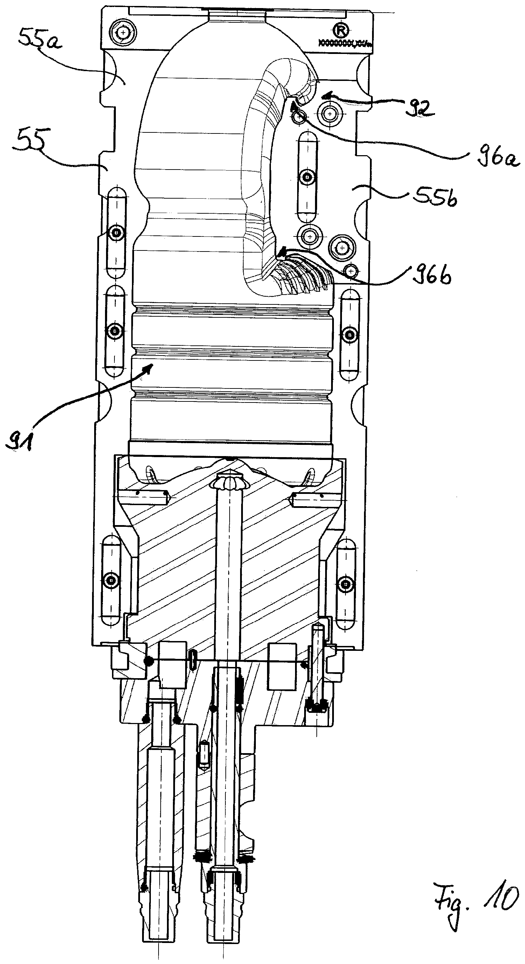

Figur 6 zeigt in einer Schnittansicht einen fertig ausgeformten Behälter (11), der mit einer Außenkontur (81) hergestellt wurde. Diese Außenkontur (81) resultiert aus einer Innenkontur (91) der zum Beispiel in Figur 10 detaillierter dargestellten Formhälfte (55), gegen die sich die entwickelnde Behälterblase (23) im Laufe des Umformungsprozesses anlegt und dabei die von den Formhälften (55, 56) vorgegebene Kontur annimmt. Eine erfindungsgemäße Besonderheit findet sich im Behälter (11) der Figur 6 im Griffbereich (82). Der Behälter (11) weist in diesem Griffbereich (82) eine Befestigungskontur (83) auf, die komplementär zu einem Innenkonturbereich (92) der Formhälfte (55) ausgeformt ist. Die Befestigungskontur (83) und Details zum Griffteil (84) sind ebenfalls in den Figuren 7 - 9 dargestellt.

Das Griffteil (84) zeichnet sich durch einen bogenförmigen Greifsteg (85) aus, der in seinem unteren und oberen Bereich (85a, 85b) der Außenkontur (81) des Behälters (11) folgend ausgeführt ist, wenn das Griffteil (84) am Behälter (11) angebracht worden ist. Dieser Greifsteg (85) umschließt zusammen mit einem rückwärtigen Ansetzbereich (87) eine Öffnung (86), durch die hindurch die Finger einer den Behälter (11) am Griffteil (84) ergreifenden Person geführt werden können. Der Ansetzbereich (87) des Griffes (84) ist charakterisiert durch einen Ansetzsteg (88), an dessen oberem und unterem Ende Rastnasen (89a, 89b) ausgebildet sind, die dem Greifsteg (85) zugewandte Anlageflächen (90a, 90b) aufweisen. Wie in der Schnittansicht der Figur 6 erkennbar, sind die Rastnasen (89a, 89b) bevorzugt formkomplementär zu Hinterschnitten (90a, 90b) des Behälters (11) ausgeführt und hintergreifen diesen Hinterschnitt (90a, 90b) in radialer Richtung, sodass das Griffteil (84) in radialer Richtung gesichert ist. Dabei ist die Dimensionierung der Hinterschnitte (90a, 90b) und der Rastnasen (89a, 89b) so gewählt, dass jedenfalls die Gewichtskraft eines gefüllten Behälters (11) bei Ergreifen des Behälters (11) am Griffteil (84) nicht zu einem Ablösen des Griffes führt, sondern der Behälter (11) sicher am Griffteil (84) gehandhabt werden kann, ohne dass der Rasteingriff gelöst wird.

Wie in der Ansicht in Figur 7 erkennbar sind die Hinterschnitte (90a, 90b) spiegelsymmetrisch zur Trennebene (72) der Formhälften (55, 56) ausgeführt und in Umfangsrichtung des Behälters (11) mit einer Krümmung versehen, damit die Schwenkbewegung der Formhälften (55, 56) um die Schwenkachse (71) herum dazu führt, dass der Griffbereich (82) des Behälters (11) aus der Befestigungskontur (92) herausgleiten kann. Die Krümmung in Umfangsrichtung folgt dazur einer Kreisbahn mit einem Radius (R) um die Schwenkachse (71) der Umformstation (53) herum. Die Umfangsausdehnung der die Hinterschnitte (90a, 90b) bildenden oberen und unteren Behälterwulste (94a, 94b) ist dabei so bemessen, dass spätestens bei Erreichen der Öffnungsstellung der Umformstation (53) die Befestigungskonturen (92) der Formhälften (55, 56) außer Eingriff mit den Hinterschnitten (90a, 90b) in den Behälterwulsten (94a, 94b) gelangt sind. Die obere Behälterwulst (94a) und die untere Behälterwulst (94b) bilden den oberen und den unteren Abschnitt des Griffbereiches (82) des Behälters (11).

Wie weiterhin in den Figuren 6 - 8 dargestellt, erweist es sich als vorteilhaft, wenn der Ansetzsteg (88) des Griffteiles (84) randseitig möglichst großflächig am Behälter (11) in dessen Griffbereich (82) anliegt.

Wie vorstehend ausgeführt erfolgt die Befestigung des Griffteiles (84) mit ausreichender Haltekraft in radialer Richtung durch Eingreifen der Rastnasen (89a, 89b) in die Hinterschnitte (90a, 90b). Die Sicherung des Griffteiles (84) in Umfangsrichtung erfolgt im dargestellten Ausführungsbeispiel durch einen sehr viel kleiner dimensionierten Hinterschnitt (97) in Umfangsrichtung, der bevorzugt formangepasst zum Ansetzsteg (88) des Griffteiles (84) ausgeführt ist und diesen Ansetzbereich (87) des Griffteiles (84) teilweise aufnimmt. Dieser Hinterschnitt (97) in Umfangsrichtung ist im dargestellten Ausführungsbeispiel nicht nur entlang des Ansetzsteges (88) vorgesehen, sondern auch entlang der Rastnasen (89a, 89b) bis hin zu den der Außenkontur (81) des Behälters (11) angepassten oberen und unteren Ausläufern (85a, 85b) des Greifsteges (85). Auf diese Weise kann selbst ein in seiner Tiefe sehr klein dimensionierter Hinterschnitt (97) aufgrund der großflächigen Anlage mit den entsprechenden Griffbereichen eine ausreichende Haltekraft gegen Verschiebung in Umfangsrichtung bereitstellen. Dabei ist zu berücksichtigen, dass in Umfangsrichtung deutlich geringere Kräfte zu halten sind als in radialer Richtung, denn die Gewichtskraft des Behälters (11) ist von dem Griffteil (84) in radialer Richtung aufzunehmen.

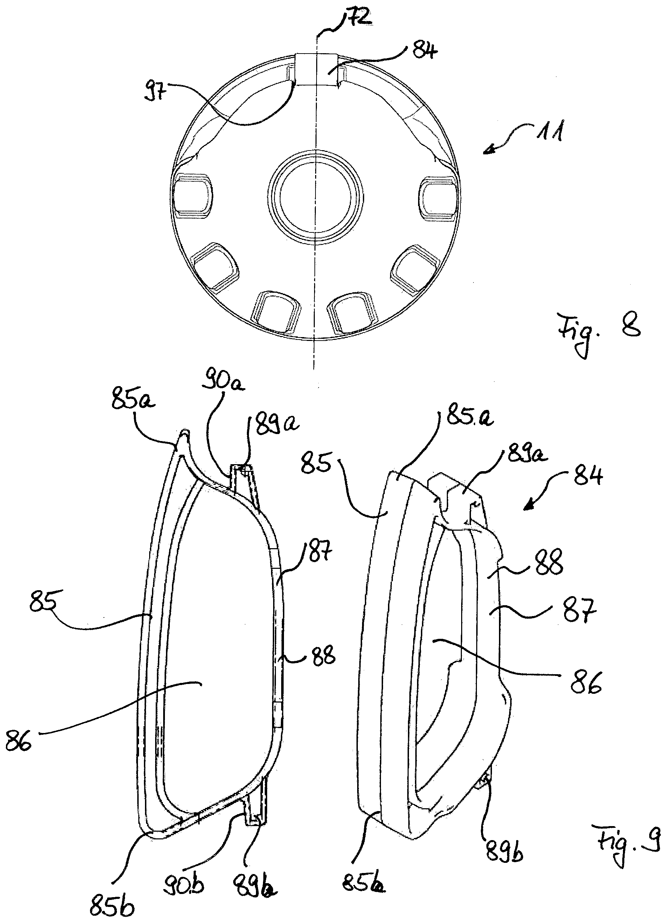

Wie in Figur 9 in der Seitenansicht erkennbar ist der Ansetzsteg (88) relativ dünnwandig ausgebildet. Weiterhin ist das Griffteil (84) aus einem biegeelastischen Material hergestellt, z.B. aus einem Kunststoff. Die Wanddicke ist dort so gewählt, dass der Ansetztsteg (88) in Richtung auf den Greifsteg (85) in die Öffnung (6) hinein gebogen werden kann, wodurch die Rastnasen (89a, 89b) aufeinander zu bewegt werden. Auf diese Weise kann das Griffteil (84) in radialer Richtung in den Griffbefestigungsbereich (82) des Behälters (11) zwischen die Wülste (94a, 94b) in radialer Richtung eingeführt werden, ohne dass die Rastnasen (89a, 89b) daran anstoßen. Bei Erreichen einer Sollposition kann die Biegekraft aufgehoben werden und das Griffteil (84) kehrt eigenfedernd zurück in die Ausgangsstellung, wodurch die Rastnasen (89a, 89b) in Eingriff mit den radialen Hinterschnitten (89a, 89b) der überstehenden Wülste (94a, 94b) gelangt, wodurch das Griffteil (84) in radialer Richtung gesichert ist.

Bezüglich der in Figur 10 gezeigten Formhälfte (55) ist auf deren zweiteilige Ausführung hinzuweisen. In ein hinterschnittfreies Formhälftenelement (55a) ist ein Einsetzelement (55b) montiert, z.B. durch Befestigungsschrauben. Dieses Einsetzelement (55b) weist die für die Ausbildung der Befestigungskontur (82) am fertigen Behälter (11) erforderliche Profilierung auf, z.B. formkomplementär zu den Behälterwülsten (94a, 94b) weist die Formhälfte (55) bzw. das Einsetzelement (55b) Konturbereiche (96a, 96b) auf. Figur 10 zeigt lediglich eine Formhälfte. Die nicht dargestellte zweite Formhälfte (56) kann spiegelbildlich zur ersten Formhälfte (55) ausgeführt sein. Figur 10 zeigt weiterhin eine Bodenform (57), die zusammen mit den beiden Formhälften (55,56) die Innenkontur (91) der Form bildet.

## Patentansprüche

1. Mehrteilig ausgebildete Form (54) für die umformende Herstellung von mit einem Griff (84) versehenen Behältern (11) aus temperaturkonditionierten Vorformlingen (2) aus einem thermoplastischen Werkstoff, insbesondere aus PET, wobei die Form (54) wenigstens zwei Formhälften (55, 56) aufweist, bevorzugt weist die Form (54) weiterhin ein Bodenteil (57) auf, wobei die Formhälften (55, 56) beweglich zueinander angeordnet und entlang einer Positionierbewegungsbahn (P) aus einer Geschlossenin eine Offenstellung positionierbar ausgebildet sind, wobei die Formhälften (55, 56) in ihrer Geschlossenstellung entlang einer Trennebene (72) aneinander anliegen und eine Kavität umschließen und eine Innenkontur (91) bereitstellen, gegen die der Vorformling (2) durch Einleiten eines Umformmediums unter Druck, ggf. durch Reckung mittels einer Reckstange (17) unterstützt, in einer radialen Richtung und in einer Längsrichtung expandiert wird, sodass der in der Form (54) expandierte fertige Behälter (11) eine zur Innenkontur (91) der Form (54) komplementäre Außenkontur (81) aufweist, wobei die Innenkontur (91) der Form (54) einen Griffbefestigungsbereich (92) aufweist, der konturiert ist für die Ausbildung einer Befestigungskontur (82) am fertigen Behälter (11) für die Anbringung eines Griffes (84) am Behälter (11) nach dessen Entnahme aus der Form (54), **dadurch gekennzeichnet, dass** der Griffbefestigungsbereich (92) als in radialer Richtung hintergreifbarer Hinterschnitt (96a, 96b) ausgebildet ist, der in Behälterumfangsrichtung der Positionierbewegungsbahn (P) folgend ausgeführt ist, so dass beim Öffnen der Form (54) der Griffbefestigungsbereich (92) aus der komplementär am Behälter (11) ausgebildeten Befestigungskontur (82) herausgleiten kann.

2. Mehrteilig ausgebildete Form (54) nach Anspruch 1, **dadurch gekennzeichnet, dass** die Formhälften (55, 56) um eine gemeinsame Schwenkachse (71) schwenkbeweglich angeordnet sind, wobei der Griffbefestigungsbereich (92) in Behälterumfangsrichtung gekrümmt konturiert ist mit einem Krümmungsradius (R), der dem radialen Abstand des Griffbefestigungsbereiches (92) zur Schwenkachse (71) entspricht.

3. Mehrteilig ausgebildete Form (54) nach Anspruch 1 oder 2, **dadurch gekennzeichnet, dass** der Griffbefestigungsbereich (92) auch in Behälterumfangsrichtung einen Hinterschnitt (97) aufweist, der um ein mehrfaches kleiner dimensioniert ist als der Hinterschnitt (96a, 96b) in radialer Richtung, nämlich so klein, dass die Öffnungsbewegung der Form (54), trotz des Hinterschnittes (97) in Umfangsrichtung aufgrund Rückschrumpf des fertigen Behälters (11) und aufgrund plastischer Verformung des Behältermaterials ausführbar ist, bevorzugt unter Überwindung eines geringen Widerstandes.

4. Mehrteilig ausgebildete Form (54) nach einem der vorhergehenden Ansprüche, **dadurch gekennzeichnet, dass** der Griffbefestigungsbereich (92) als Einbauteil (55b) ausgeführt ist, das in ein Formelement (55a) mit hinterschnittfreier Innenkontur montierbar ist.

5. Mehrteilig ausgebildete Form (54) nach einem der vorherigen Ansprüche, wobei der Hinterschnitt (96a, 96b) in radialer Richtung einen hintergeifbaren Bereich (90a, 90b) im Behälter (11) erzeugt, aufweist, dessen Erstreckung in Behälterlängsrichtung wenigstens 0,5 cm, bevorzugt mindestens 0,7 cm, weiterhin bevorzugt mindestens 1 cm beträgt.

6. Mehrteilig ausgebildete Form (54) nach Anspruch 3 oder nach einem der 4 oder 5, soweit auf Anspruch 3 rückbezogenen, **dadurch gekennzeichnet, dass** der Hinterschnitt (96a, 96b) in radialer Richtung wenigstens um einen Faktor 5 größer dimensioniert ist als der Hinterschnitt (97) in Umfangsrichtung, bevorzugt wenigstens um einen Faktor 10.

7. Mehrteilig ausgebildete Form (54) nach einem der vorhergehenden Ansprüche, **dadurch gekennzeichnet, dass** sich der Griffbefestigungsbereich (92) zu beiden Seiten der Trennebene (72) erstreckt, insbesondere in den schwenkachsenabgewandten, freien Endbereichen der Formhälften (55, 56), insbesondere spiegelsymmetrisch zu beiden Seiten der Trennebene (72).

8. Umformstation (10, 53) mit einer mehrteilig ausgebildeten Form (54) nach einem der vorhergehenden Ansprüche, wobei die Formhälften (55, 56) der Form (54) von Formträgern (69, 70) der Umformstation (10, 53) gehaltert sind, insbesondere austauschbar gehaltert.

9. Umformrad (9) rotierender Bauart mit mehreren umfangsbeabstandet daran angeordneten Umformstationen (10, 53) nach Anspruch 8.

10. Umformmaschine (A) mit wenigstens einer Umformstation (10, 54) nach Anspruch 8, insbesondere mit einem drehangetriebenen Umformrad (9) nach Anspruch 9.

11. Verfahren zur umformenden Herstellung von mit einem Griff (84) versehenen Behältern (11) aus temperaturkonditionierten Vorformlingen (2) aus einem thermoplastischen Werkstoff, insbesondere aus PET, wobei eine mehrteilig ausgebildete Form (54) nach einem der Ansprüche 1 bis 7 verwendet wird, wobei an dem fertigen Behälter (11) nach dessen Entnahme aus der Form (54) ein Griff (84) befestigt wird, der eine Eingriffskontur (89a, 89b) aufweist, die formschlüssig mit der Befestigungskontur (82) am fertigen Behälter (11) in Eingriff bringbar ist.

12. Mit einem Griff (84) versehener Behälter (11), der nach Verfahrensanspruch 11 hergestellt ist.

## Claims

1. Multi-part mould (54) for the machined forming of containers (11) provided with a handle (84) of temperature-conditioned preforms (2) made of a thermoplastic material, in particular, made of PET, wherein the mould (54) comprises at least two mould halves (55, 56), preferably the mould (54) furthermore comprises a base part (57), wherein the mould halves (55, 56) are movably arranged towards each other and arranged along a positioning motion path (P) from a closed into an open position, wherein the mould halves (55, 56) rest on each other in their closed position along a separating plane (72) and enclose a cavity and provide an inner contour (91), against which the preform (2) is supported by introduction of a forming medium under pressure, and if necessary, is expanded in a radial direction and in a longitudinal direction by stretching by means of a stretching bar (17) so that the finished container (11) expanded in the mould (54) comprises an outer contour (81) complementary to the inner contour (91) of the mould (54), wherein the inner contour (91) of the mould (54) comprises a handle mounting area (92), which is contoured for the formation of a fastening contour (82) on the finished container (11) for the attachment of a handle (84) to the container (11) after its removal from the mould (54), **characterized in that** the handle mounting area (92) is formed as a undercut (96a, 96b) that can be gripped behind in the radial direction, which is designed to follow in the container's circumferential direction of the positioning movement path (P) so that, when opening the mould (54), the handle mounting area (92) can slide out of the fastening contour (82) that is complementarily formed on the container (11).

2. Multi-part mould (54) according to Claim 1, **characterized in that** the mould halves (55, 56) are arranged around a common pivot axis (71) in a pivotably moving manner, wherein the handle mounting area (92) is curved in the container circumferential direction with a radius of curvature (R) corresponding to the radial distance of the handle mounting area (92) to the pivot axis (71).

3. Multi-part mould (54) according to Claim 1 or 2, **characterized in that** the handle mounting area (92) also comprises an undercut (97) in the container's circumferential direction, which is dimensioned several times smaller than the undercut (96a, 96b) in the radial direction, namely being so small that the opening movement of the mould (54) can be carried out despite the undercut (97) in the circumferential direction due to shrinkage of the finished container (11) and due to plastic deformation of the container material, preferably by overcoming a low level of resistance.

4. Multi-part mould (54) according to any one of the preceding claims, **characterized in that** the handle mounting area (92) is designed as an installation part (55b), which can be mounted in a moulding element (55a) with an undercut-free inner contour.

5. Multi-part mould (54) according to any one of the preceding claims, wherein the undercut (96a, 96b) in the radial direction creates an area (90a, 90b) that can not be engaged behind in the container (11), the extension of which in the longitudinal direction of the container is at least 0.5 cm, preferably at least 0.7 cm, being furthermore preferred, at least 1 cm.

6. Multi-part mould (54) according to Claim 3 or according to any one of the Claims 4 or 5, insofar as reference is made back to Claim 3, **characterized in that** the undercut (96a, 96b) in the radial direction is dimensioned at least by a factor of five greater than the undercut (97) in the circumferential direction, preferably at least by a factor of 10.

7. Multi-part mould (54) according to any one of the preceding claims, **characterized in that** the handle mounting area (92) extends to both sides of the separation plane (72), in particular, in the pivot-axis-facing free end areas of the mould halves (55, 56), in particular, being mirror-symmetrical to both sides of the separation plane (72).

8. Forming station (10, 53) with a multi-part mould (54) according to any one of the preceding claims, wherein the mould halves (55, 56) of the mould (54) of mould carriers (69, 70) of the forming station (10, 53) are held, in particular, being mounted in a replaceable manner.

9. Design rotating a forming wheel (9) with a plurality of forming stations arranged at it (10, 53) according to Claim 8.

10. Forming machine (A) with at least one forming station (10, 54) according to Claim 8, in particular, with a rotary-driven forming wheel (9) according to Claim 9.

11. A method for machined forming of containers (11) provided with a handle (84) from temperature-conditioned preforms (2) made of a thermoplastic material, in particular, made of PET, wherein a multi-part mould (54) according to any one of Claims 1 to 7 is used, wherein a handle (84) is attached to the finished container (11) after its removal from the mould (54), which comprises a detent contour (89a, 89b) which can engaged in a positive-locking manner with the fastening contour (82) on the finished container (11).

12. Container (11) with a handle (84) manufactured according to Method Claim 11.

## Revendications

1. Moule (54) à plusieurs parties pour la production par moulage de récipients (11) dotés d'une poignée (84) à partir de préformes (2) thermiquement conditionnées en matériau thermoplastique, notamment en PET, le moule (54) présentant au moins deux demi-moules (55, 56) et présentant de préférence en outre un élément de fond (57), les demi-moules (55, 56) étant agencés de façon à être mobiles l'un par rapport à l'autre et conformés de façon à pouvoir être positionnés le long d'un trajet de positionnement (P) d'une position fermée en une position ouverte les demi-moules (55, 56) étant contigus le long d'un plan de séparation (72), lorsqu'ils sont en position fermée, et entourant une cavité en mettant à disposition un contour intérieur (91) contre lequel la préforme (2) est expansée en sens radial et en sens longitudinal par l'introduction d'un agent de moulage sous pression, éventuellement accompagnée d'un étirage au moyen d'une barre d'étirage (17), de sorte que le récipient (11) fini expansé dans le moule (54) présente un contour extérieur (81) complémentaire du contour intérieur (91) du moule (54), le contour intérieur (91) du moule (54) présentant une zone (92) de fixation d'une poignée, le contour de cette zone étant conçu pour former un contour de fixation (82) sur le récipient fini (11) pour la fixation d'une poignée (84) sur le récipient (11) après son extraction du moule (54), **caractérisé en ce que** la zone (92) de fixation d'une poignée est conformée avec une zone en retrait (96a, 96b) permettant une emprise arrière en sens radial, cette zone étant réalisée de façon à suivre à la périphérie du récipient le trajet de positionnement (P) de sorte qu'à l'ouverture du moule (54) la zone (92) de fixation d'une poignée coulisse hors du contour de fixation (82) complémentaire formé sur le récipient (11).

2. Moule (54) à plusieurs parties selon la revendication 1, **caractérisé en ce que** les demi-moules (55, 56) sont agencés de façon à pouvoir pivoter autour d'un axe de pivotement (71) commun, la zone de fixation d'une poignée (92) ayant, dans le sens périphérique du récipient, un contour curviligne de rayon de courbure (R) correspondant à l'espacement radial entre la zone de fixation d'une poignée (92) et l'axe de pivotement (71).

3. Moule (54) à plusieurs parties selon la revendication 1 ou 2, **caractérisé en ce que** la zone de fixation d'une poignée (92) présente également dans le sens périphérique du récipient une zone en retrait (97) de dimensions considérablement inférieures à celles de la zone en retrait radial (96a, 96b), à savoir suffisamment petites pour que le mouvement d'ouverture du moule (54) soit - malgré la zone en retrait périphérique (97) - réalisable, de préférence en surmontant une légère résistance, du fait de la rétraction du récipient fini (11) et du fait de la déformation plastique du matériau du récipient.

4. Moule (54) à plusieurs parties selon l'une des revendications précédentes, **caractérisé en ce que** la zone de fixation d'une poignée (92) est réalisée sous forme de pièce à insérer (55b) pouvant être montée dans un élément de moulage (55a) avec un contour intérieur sans zone en retrait.

5. Moule (54) à plusieurs parties selon l'une des revendications précédentes, la zone en retrait radial (96a, 96b) produisant en sens radial dans le récipient (11) une zone (90a, 90b) permettant une emprise arrière et s'étendant en sens longitudinal du récipient sur au moins 0,5 cm, de préférence sur au moins 0,7 cm, voire de préférence sur au moins 1 cm.

6. Moule (54) à plusieurs parties selon la revendication 3 ou selon l'une des revendications 4 ou 5 dans la mesure où celles-ci se réfèrent à la revendication 3, **caractérisé en ce que** le dimensionnement de la zone en retrait radial (96a, 96b) est supérieur d'au moins un facteur 5 à celui de la une zone en retrait périphérique (97) et de préférence d'au moins un facteur 10.

7. Moule (54) à plusieurs parties selon l'une des revendications précédentes, **caractérisé en ce que** la zone de fixation d'une poignée (92) s'étend des deux côtés du plan de séparation (72), notamment dans les zones des bords libres des demi-moules (55, 56) opposés à l'axe de pivotement, notamment selon un agencement symétrique par rapport au plan de séparation (72).

8. Station de formage (10, 53) avec un Moule (54) à plusieurs parties selon l'une des revendications précédentes, les demi-moules (55, 56) du moule (54) étant maintenus par des porte-moule (69, 70) de la station de formage (10, 53) et notamment maintenus de façon interchangeable.

9. Roue de formage (9) de construction rotative avec plusieurs stations de formage (10, 53) selon la revendication 8 qui y sont agencées avec un certain espacement périphérique.

10. Machine de formage (A) avec au moins une station de formage (10, 54) selon la revendication 8, notamment dotée d'une roue de formage à entraînement rotatif (9) selon la revendication 9.

11. Procédé de production par moulage de récipients (11) dotés d'une poignée (84) à partir de préformes (2) thermiquement conditionnées en matériau thermoplastique, notamment en PET, faisant appel à un moule (54) à plusieurs parties selon l'une des revendications 1 à 7, une poignée (84) étant fixée sur le récipient fini (11) après son extraction du moule (54), cette poignée présentant un contour d'insertion (89a, 89b) pouvant s'engager par complémentarité de forme dans le contour de fixation (82) du récipient fini (11).

12. Récipient (11) dotée d'une poignée (84) produit selon la revendication de procédé 11.
